# FASCICULE DE BREVET EUROPEEN

(11) **EP 0 712 654 B1**
(45) Date de publication et mention de la délivrance du brevet: **16.05.2001**
(21) Numéro de dépôt: 95402549.0
(22) Date de dépôt: 15.11.1995
(51) Int. Cl.: B01D 50/00, B01D 36/04

(54) **Dispositif de séparation et de filtrage de particules dans un débit de fluide**
Vorrichtung zum Trennen und Filtern von Partikeln aus einem strömenden fluiden Medium
Device for the separation and filtration of particles from a flouring medium

(30) Priorité: 16.11.1994 FR 9413681
(43) Date de publication de la demande: 22.05.1996
(73) Titulaire: SNECMA MOTEURS, 75015 Paris (FR)
(72) Inventeur: Mouton, Pierre Charles, F-91350 Grigny (FR)
(74) Mandataire: Berrou, Paul

(56) Documents cités:
- GB-A- 2 064 359
- US-A- 3 872 012
- US-A- 3 925 044
- US-A- 4 248 613

## Description

L'invention concerne un dispositif de séparation et de filtration de particules dans un débit de fluide. Elle s'applique notamment à la séparation et à la filtration des particules solides dans un circuit d'alimentation en carburant dosé d'une turbomachine.

Dans de nombreux dispositifs utilisant des liquides sous pression élevée, il faut que le liquide soit parfaitement filtré pour éviter l'usure provoquée par ses contaminants. Il est courant de satisfaire à cette condition au moyen d'une cartouche filtrante qui peut être remplacée lorsqu'elle est colmatée. Il est aussi courant de monter une soupape de dérivation qui permet de faire circuler le liquide en évitant une cartouche colmatée. L'état du filtre doit être contrôlé régulièrement de manière à éviter une détérioration rapide des appareils coûteux que le filtre est destiné à protéger.

Dans le cas particulier d'un système d'alimentation et de dosage du carburant d'une turbomachine comportant généralement une pompe à engrenages, par exemple de type volumétrique, un dispositif de dosage de débit et des injecteurs de carburant, il est nécessaire de protéger ce système d'une contamination externe provenant des réservoirs de carburant et de protéger le dispositif de dosage et les injecteurs de la contamination due à des particules d'usure produites par la pompe, voire à une dégradation de la pompe. Cependant cette double protection ne peut pas être obtenue en utilisant un seul filtre. Par ailleurs,l'utilisation de deux filtres placés respectivement en amont et en aval de la pompe entraîne des difficultés d'installation, une augmentation de la masse du moteur, des opérations de maintenance supplémentaires et une difficulté fonctionnelle due aux fortes pressions en aval de la pompe. par ailleurs ces systèmes introduisent des pertes de charge non négligeables qui augmentent en fonction du degré de colmatage du filtre.

L'invention a pour but de réaliser un dispositif de séparation et de filtration de particules solides lourdes dans un débit de fluide qui soit efficace, qui soit insensible au phénomène de colmatage et, qui n'introduise que de faibles pertes de charge.

L'invention a également pour but de réaliser un dispositif de séparation et de filtration qui puisse être utilisé facilement en aval d'un filtre mécanique dans le cas où une double protection est nécessaire, tel que par exemple dans le cas d'un circuit d'alimentation en carburant comportant une pompe à engrenages, pour filtrer les particules qui proviennent de l'usure, voire de la dégradation, de la pompe.

Un autre but de l'invention est, dans le cas particulier d'un système d'alimentation en carburant, de réaliser un dispositif de séparation et de filtration qui ne nécessite pas de surveillance particulière en dehors des opérations de maintenance lors d'une panne de la pompe à carburant, et qui ne risque pas d'entraîner un mauvais fonctionnement du système de distribution du carburant. Pour cela, l'invention consiste à séparer le débit à traiter en deux circuits d'écoulement de fluide en utilisant la force d'inertie ou la force de masse (force centrifuge) des particules due à la forte masse spécifique des particules par rapport à la masse spécifique du fluide. On connaît par GB-A-2 064 359 un dispositif de filtration dans lequel l'écoulement périphérique est rejeté, l'écoulement central seul étant conservé après filtration.

Selon l'invention, la séparation du débit à traiter est effectuée en donnant un mouvement hélicoïdal au débit de fluide axial. L'effet centrifuge concentre les particules lourdes à la périphérie du débit de fluide. L'écoulement proche du centre débarrassé des particules les plus lourdes traverse un séparateur à inertie qui parfait l'élimination des dernières particules. Le débit de fluide périphérique contaminé traverse alors un système de filtration mécanique qui retient les particules lourdes et laisse passer le fluide purifié qui se mélange alors à l'écoulement central propre. L'intégralité du débit de fluide entrant dans le dispositif de l'invention se retrouve à la sortie de ce dispositif.

Selon l'invention, le dispositif de séparation et de filtration de particules dans un débit de fluide contaminé caractérisé en ce qu'il comporte :
- un boîtier muni d'un conduit d'entrée de fluide et d'un conduit de sortie de fluide,
- un séparateur cyclonique monté dans le conduit d'entrée de fluide et destiné à concentrer les particules à la périphérie du débit de fluide,
- un élément tubulaire monté à l'extrémité aval du séparateur cyclonique , l'élément tubulaire ayant un diamètre amont inférieur à celui du conduit d'entrée de fluide de manière à délimiter un double circuit coaxial d'écoulement de fluide constitué d'un circuit central d'écoulement de fluide propre et d'un circuit périphérique d'écoulement de fluide contaminé,
- un dispositif de filtration mécanique de l'écoulement de fluide contaminé définissant un passage central, d'axe parallèle à la direction générale d'écoulement du fluide propre et communiquant avec le conduit de sortie, l'extrémité amont du passage central recueillant l'écoulement central du fluide propre et le débit du dit écoulement de fluide contaminé, après son passage à travers le filtre se mélangeant ainsi purifié au débit de fluide propre pour former un débit total dans le conduit de sortie égal au débit de fluide dans le conduit d'entrée.

D'autres particularités ou avantages de l'invention apparaîtront clairement dans la suite de la description donnée à titre d'exemple non limitatif et faite en regard des figures annexées qui représentent :
- la figure 1, un schéma de principe d'un dispositif de séparation et de filtration de particules montrant l'écoulement du fluide propre et du fluide contaminé par des particules lourdes, selon l'invention ;
- la figure 2, une vue en coupe d'un exemple de réalisation d'un dispositif de séparation et de filtration de particules dans un débit de fluide, selon l'invention.

Les particules qui résultent de l'usure voire de la dégradation d'une pompe à engrenages sont surtout composées de poussière de bronze provenant des paliers de cette pompe mais aussi d'écailles provenant des engrenages. La masse spécifique de ces particules est 7 à 10 fois supérieure à celle du carburant.

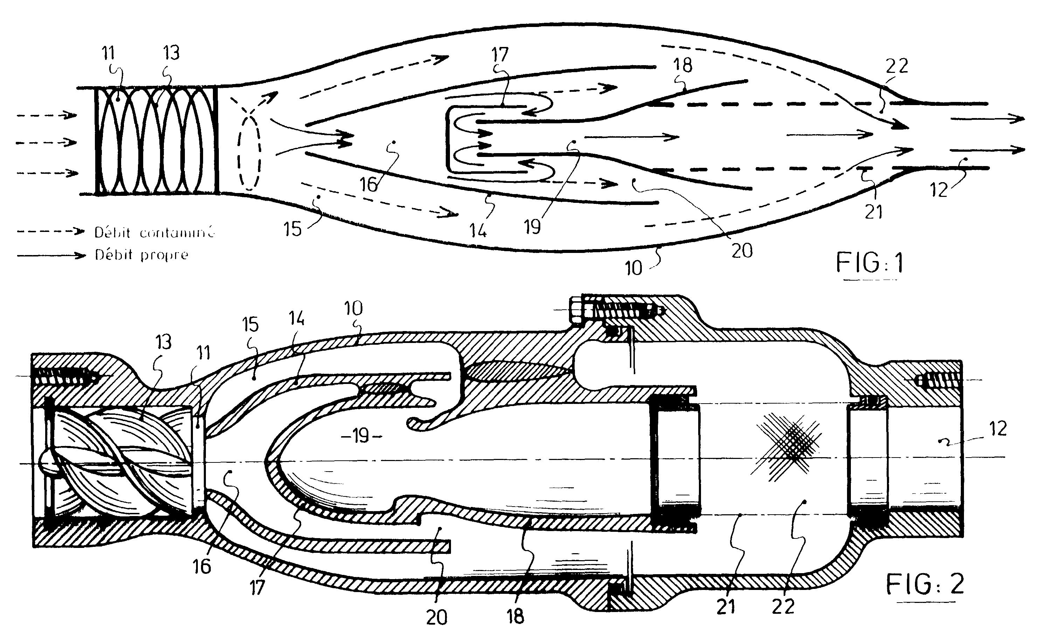

Pour séparer et filtrer ces particules, le dispositif de l'invention représenté sur les figures 1 et 2 comporte un boîtier 10 muni d'un conduit d'entrée 11 et d'un conduit de sortie 12 entre lesquels circule un fluide, par exemple du carburant, chargé de particules d'impuretés lourdes. A l'intérieur du boîtier, est logé un premier dispositif de séparation constitué par un séparateur 13 du type cyclonique associé à un élément tubulaire 14. Le séparateur cyclonique (13) est logé dans le conduit d'entrée 11 et comporte une douille hélicoïdale destinée à communiquer au fluide un mouvement tourbillonnaire autour de l'axe longitudinal du conduit. Par effet centrifuge, le mouvement tourbillonnaire oblige les particules lourdes à se diriger vers les zones périphériques de l'écoulement de fluide, les particules les plus légères se dirigeant dans la partie centrale de l'écoulement de fluide.

A l'extrémité aval du séparateur cyclonique, est monté un élément tubulaire 14 de préférence de forme évasée avec un diamètre amont inférieur à celui du conduit d'entrée 11 de manière à délimiter un passage annulaire entre l'élément tubulaire 14 et les parois du boîtier 10, ce passage étant destiné à canaliser, dans un conduit périphérique 15, la partie externe de l'écoulement de fluide fortement chargée en particules lourdes, et un passage central destiné à canaliser dans un conduit central 16, la partie centrale de l'écoulement de fluide débarrassée des particules lourdes. Le premier dispositif de séparation délimite ainsi un double circuit coaxial d'écoulement de fluide constitué d'un circuit central d'écoulement de fluide propre et d'un circuit périphérique d'écoulement de fluide contaminé. Pour parfaire la séparation des particules lourdes dans le débit de fluide, un deuxième système de séparation est disposé dans le conduit central 16 d'écoulement de fluide propre, coaxialement à l'élément tubulaire 14. Ce deuxième système de séparation, du type séparateur à inertie se compose d'une pièce 17 de forme cylindrique de diamètre inférieur au diamètre de l'élément tubulaire 14 et fermée en son extrémité amont. Cette pièce cylindrique 17 est logée à l'intérieur de l'élément tubulaire 14.

A l'extrémité aval de cette pièce cylindrique 17, est monté un élément déflecteur 18 de forme évasée avec un diamètre amont inférieur au diamètre de la pièce cylindrique 17 de manière à délimiter un passage annulaire entre le déflecteur 18 et les parois internes de la pièce cylindrique 17.

L'élément déflecteur 18 s'étend dans le prolongement de la pièce cylindrique 17 au delà de l'élément tubulaire 14 et délimite avec la pièce cylindrique 17 un passage central cylindrique 19 débouchant à l'extrémité aval du déflecteur 18, ce passage central 19 appartenant au circuit central d'écoulement de fluide.

Le séparateur à inertie étant disposé dans le conduit central 16, il a d'abord pour effet de canaliser l'écoulement central entre la pièce cylindrique 17 et l'élément tubulaire 14 puis, à l'extrémité aval de la pièce cylindrique, d'obliger cet écoulement central à changer brusquement de direction de façon à ce qu'il se dirige, par l'intermédiaire du passage annulaire, dans le passage central cylindrique 19. Le changement de direction étant effectué avec un rayon de courbure très faible, les particules lourdes qui n'ont pas été séparées par le séparateur cyclonique ne peuvent pas effectuer le changement de direction et se dirigent dans un circuit dérivé 20 au parcours plus doux qui se déverse dans le conduit périphérique 15 où circule le fluide contaminé. Seul l'écoulement de fluide propre débarrassé des particules lourdes résiduelles circule alors le passage central cylindrique 19 qui appartient donc au circuit central d'écoulement de fluide. Le circuit dérivé 20 est localisé entre le déflecteur 18 et l'élément tubulaire 14.
A l'extrémité aval du déflecteur, un dispositif de filtration mécanique 21 destiné à retenir les particules lourdes est monté dans le circuit central d'écoulement de fluide propre parallèlement à l'écoulement de fluide en amont du conduit de sortie 12. Le filtre mécanique 21 comporte un passage central cylindrique 22 communiquant avec le passage central 19 du déflecteur cylindrique 18 et de la pièce cylindrique 17 et avec le conduit de sortie 12 du dispositif de séparation et de filtration, ce passage central 19 permettant au fluide propre circulant dans le circuit central du dispositif de séparation de déboucher directement dans le conduit de sortie 12. De manière à mieux conserver les particules arrêtées par le dispositif, une installation verticale (écoulement de haut en bas) sera préférée.

Le débit de fluide contaminé provenant du conduit périphérique de séparateur cyclonique et du circuit dérivé du séparateur à inertie passe au travers du filtre qui retient les particules lourdes. Après passage dans le filtre, ce débit de fluide purifié débouche dans le circuit central où circule le fluide propre. L'intégralité du débit de fluide débouche alors dans le conduit de sortie du dispositif de séparation et de filtration des particules lourdes. L'intégralité du débit de fluide entrant dans le dispositif de séparation et de filtration se retrouvant à la sortie de ce dispositif, il est alors possible d'installer ce dispositif sur un circuit de fluide dont le débit a été préalablement dosé.

Le dispositif de séparation et de filtration comporte un certain nombre d'avantages. Il est insensible au phénomène de colmatage puisque si le filtre 21 est colmaté, le débit de fluide continue de passer par le circuit central sans utilisation de soupape de dérivation donc sans risque de libérer les impuretés contenues dans le filtre 21. Il y a seulement dégradation du pouvoir de séparation car l'ensemble du débit passe par le conduit central 16. Cependant, le dispositif de séparation et de filtration constituera encore un piège à particules. Le dispositif de séparation et de filtration est également insensible au phénomène de givrage, même si la température est inférieure à zéro degré celcius, puisque le circuit central est très perméable et ne peut s'obstruer avec des particules de givre.
Seules les particules lourdes sont déviées et filtrées alors que les particules légères ou très fines restent dans le circuit central et ne risquent pas de contaminer le filtre 21. Le filtre 21 peut donc être très fin.

L'invention n'est pas limitée à l'exemple de réalisation précisément décrit. Ainsi, le nombre de séparateurs de particules peut être différent de deux. En particulier, il n'est pas indispensable de monter un séparateur à inertie dans le circuit central d'écoulement de fluide en aval du séparateur cyclonique. En effet, le dispositif de séparation et de filtration de particules peut ne comporter qu'un séparateur cyclonique 13 associé à un élément tubulaire 14 et un dispositif de filtration mécanique 21 de l'écoulement de fluide contaminé monté dans le circuit central d'écoulement de fluide entre l'élément tubulaire 14 et le conduit de sortie et parallèlement à l'écoulement de fluide propre.
Il est également possible de disposer en série plusieurs séparateurs à inertie associés à des déflecteurs, le filtre étant alors disposé entre le dernier déflecteur et le conduit de sortie. Dans tous les cas de réalisation possibles, la perte de charges est très faible et le débit de fluide sortant du dispositif de séparation et de filtration est le même que le débit entrant.
Par ailleurs, dans le cas d'une utilisation du dispositif de séparation et de filtration dans un circuit d'alimentation en carburant comportant un filtre disposé en amont d'une pompe, le séparateur centrifuge est efficace même si le filtre amont est colmaté. Dans ce cas, il est possible d'assurer dans des conditions de pureté convenable l'alimentation en carburant. En cas de colmatage du filtre amont et du filtre 21, le débit de fluide n'est pas interrompu.

## Revendications

1. Dispositif de séparation et de filtration de particules dans un débit de fluide contaminé caractérisé en ce qu'il comporte :
- un boîtier (10) muni d'un conduit d'entrée (11) de fluide et d'un conduit de sortie (12) de fluide,
- un séparateur cyclonique (13) monté dans le conduit d'entrée (11) de fluide et destiné à concentrer les particules à la périphérie du débit de fluide,
- un élément tubulaire (14) monté à l'extrémité aval du séparateur cyclonique (13), l'élément tubulaire (14) ayant un diamètre amont inférieur à celui du conduit d'entrée (11) de fluide de manière à délimiter un double circuit coaxial d'écoulement de fluide constitué d'un circuit central d'écoulement de fluide propre et d'un circuit périphérique d'écoulement de fluide contaminé,
- un dispositif de filtration mécanique (21) de l'écoulement de fluide contaminé définissant un passage central (22), d'axe parallèle à la direction générale d'écoulement du fluide propre et communiquant avec le conduit de sortie (12), l'extrémité amont du passage central (22) recueillant l'écoulement central du fluide propre et le débit du dit écoulement de fluide contaminé, après son passage à travers le filtre (21) se mélangeant ainsi purifié au débit de fluide propre pour former un débit total dans le conduit de sortie (12) égal au débit de fluide dans le conduit d'entrée (11).

2. Dispositif de séparation et de filtration selon la revendication 1, caractérisé en ce qu'il comporte, en outre, entre le circuit central d'écoulement de fluide propre entrant dans l'élément tubulaire (14) et le passage central (22) du dispositif de filtration (21), un séparateur supplémentaire à inertie constitué d'une pièce cylindrique (17) fermée à son extrémité amont et d'un élément déflecteur (18) dont l'extrémité amont pénètre sur une partie de la hauteur de la pièce cylindrique (17) en créant avec la pièce (17) un passage annulaire, l'extrémité avale du déflecteur (18) s'étendant au delà de la partie avale de l'élément tubulaire (14), de manière à canaliser une partie de l'écoulement central de fluide propre dans le passage annulaire puis dans l'entrée (19) du déflecteur (18) en direction du passage central (22) du dispositif de filtration (21), le reste de l'écoulement central de fluide propre se dirigeant par le passage restant entre l'élément tubulaire (14) et le déflecteur (18) vers le circuit périphérique de fluide contaminé.

## Patentansprüche

1. Vorrichtung zum Trennen und Filtern von Partikeln aus einem kontaminierten strömenden fluiden Medium,
**dadurch gekennzeichnet, dass** sie aufweist:
- ein Gehäuse (10) mit einer Zugangsleitung (11) für das fluide Medium und einer Auslassleitung (12) für das fluide Medium,
- einen Fliehkraft-Separator (13), der in der Zugangsleitung (11) für das fluide Medium sitzt und die Funktion hat, die Partikel an der Peripherie des strömenden fluiden Mediums zu konzentrieren,
- ein rohrförmiges Element (14), das am hinteren Ende des Fliehkraft-Separators (13) sitzt, wobei dieses rohrförmige Element (14) vorne einen kleineren Durchmesser hat als die Zugangsleitung (11) für das fluide Medium, so dass ein doppelter koaxialer Strom des fluiden Mediums entsteht, und zwar ein zentraler Strom des sauberen fluiden Mediums und ein äußerer Strom des kontaminierten fluiden Mediums,
- eine Vorrichtung zum mechanischen Filtern (21) des kontaminierten strömenden fluiden Mediums, die eine zentrale Passage (22) bildet, deren Achse parallel zur allgemeinen Strömungsrichtung des sauberen fluiden Mediums verläuft, und die mit der Auslassleitung (12) kommuniziert, wobei das vordere Ende der zentralen Passage (22) den zentralen Strom des sauberen fluiden Mediums sowie den genannten Strom des kontaminierten fluiden Mediums nach dessen Durchgang durch den Filter (21), wenn er sich auf diese Weise gereinigt wider mit dem Strom des sauberen fluiden Mediums vermischt, aufnimmt, so dass in der Auslassleitung (12) ein Gesamtstrom gebildet wird, der gleich groß wie der Strom des fluiden Mediums in der Zugangsleitung (11) ist.

2. Vorrichtung zum Trennen und Filtern nach Anspruch 1, dadurch gekennzeichnet, dass sie ferner zwischen dem zentralen Strom des sauberen fluiden Mediums, der in das rohrförmige Element ( eintritt, und der zentralen Passage (22) der Filtervorrichtung (21) einen zusätzlichen Trägheits-Separator aufweist, der aus einem zylindrischen Teil (17), das an seinem vorderen Ende geschlossen ist, und einem Ablenkelement (18) besteht, dessen vorderes Ende in einem oberen Bereich des zylindrischen Teils (17) eindringt und dadurch mit dem Teil (17) einen ringförmigen Durchlass bildet, wobei das hintere Ende des Ablenkelements (18) sich über den hinteren Teil des rohrförmigen Elements (14) hinaus erstreckt, so dass ein Teil des zentralen Stroms des sauberen fluiden Mediums in den ringförmigen Durchlass und dann in den Eingang (19) des Ablenkelements (18) in Richtung der zentralen Passage (22) der Filtervorrichtung (21) geleitet wird, wobei der Rest des zentralen Stroms des sauberen fluiden Mediums durch den Durchlass zwischen dem rohrförmigen Element (14) und dem Ablenkelement (18) zu dem äußeren Strom des kontaminierten fluiden Mediums hin strömt.

## Claims

1. A system for separating and filtering particles contained in a contaminated fluid flow, characterised in that it comprises:
a casing (10) having a fluid inlet duct (11) and a fluid outlet duct (12); a cyclonic separator (13) disposed in the fluid inlet duct (11) and serving to concentrate the particles at the periphery of the fluid flow;
a tubular element (14) disposed at the downstream end of the cyclonic separator (13), the tubular element having an upstream diameter less than that of the fluid inlet duct (11) so as to define a coaxial double fluid flow circuit consisting of a central clean fluid flow circuit and a peripheral contaminated fluid flow circuit;
a mechanical device (21) serving to filter the contaminated fluid flow defining a central passage (22) whose axis is parallel to the general direction of the clean fluid flow and which communicates with the outlet duct (12), the upstream end of the central passage (22) collecting the central clean fluid flow and the discharge of said contaminated fluid flow, mixing, in a purified state after passing through the filter (21), with the clean fluid flow to form in the outlet duct (12) a total flow equal to the total fluid flow in the inlet duct (11).

2. A separating and filtering system according claim 1, characterised in that it also comprises, between the central clean fluid flow circuit entering the tubular element (14) and the central passage (22) of the filtering device (21), an additional inertia separator consisting of a cylindrical member (17) closed at its upstream end and of a deflector element (18) whose upstream end extends over some of the height of the cylindrical member (17) forming therewith an annular passage, the downstream end of the deflector (18) extending beyond the downstream part of the tubular element (14) so as to channel some of the central clean fluid flow into the annular passage and then into the inlet (19) of the deflector (18) in the direction of the central passage (22) of the filtering device (21), the remainder of the central clean fluid flow passing through the passage remaining between the tubular element (14) and the deflector (18) towards the peripheral contaminated fluid circuit.
